# EUROPEAN PATENT APPLICATION

(11) **EP 0 575 007 A2**
(43) Date of publication of application: **22.12.1993**
(21) Application number: 93201733.8
(22) Date of filing: 16.06.1993
(51) Int. Cl.: C08G 61/08

(54) **Bulk polymerization of norbornene derivatives**

(30) Priority: 18.06.1992 EP 92201798
(71) Applicant: SHELL INTERNATIONALE RESEARCH MAATSCHAPPIJ B.V., NL-2596 HR Den Haag (NL)
(72) Inventor: Sjardijn, Willem, NL-1031 CM Amsterdam (NL); Seelen-Kruijssen, Josepha Maria Elisabeth, NL-1031 CM Amsterdam (NL); van der Linden-Lemmers, Wilhelmina Johanna Maria, NL-1031 CM Amsterdam (NL)

(57) **Abstract**

A process for the bulk polymerization of norbornene derivatives which comprises contacting a norbornene derivative with a catalyst system which may be prepared by combining
a) a tungsten compound catalyst component obtainable by combining a tungsten oxytetrahalide and a substituted phenol having at least one bulky alkyl substituent, containing at least 3 carbon atoms, on the aromatic ringstructure in a position which is ortho with respect to the hydroxyl group, and
b) at least a tin hydride of general formula (R¹R²R³)SnH, wherein R¹ and R² each may represent hydrogen or may have the meaning of R³, representing an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group.

## Description

The invention relates to a process for the polymerization of norbornene derivatives, to the polymers thus prepared, and to the catalyst employed.

Bulk polymerization of dicyclopentadiene (hereinafter referred to as DCPD) is known, e.g. from European Patent Application 0222432, wherein the bulk polymerization of DCPD has been described in the presence of a catalyst system comprising a tungsten compound, obtainable from WCl₆ and a substituted phenol having at least one specified bulky alkyl substituent in an ortho position with respect to the hydroxyl group, and a specified tin hydride of general formula (R²)₃ SnH. The latter compound was regarded as the activator component of the catalyst system. A special feature of said process is that it is also very suitable for the polymerization of DCPD not having the highest degree of purity.

In European Patent Application 0336486 a process for the bulk polymerization of DCPD has been described, which is rather similar to the one described hereinbefore, but for it being conducted in the presence of a tungsten based catalyst system having a higher activity and thus resulting in a higher reaction rate, i.e. a catalyst comprising a tungsten compound, obtainable from a tungsten halide and a phenol not having a bulky alkyl substituent on the ringstructure in an ortho position with respect to the hydroxyl group, and a tin hydride activator as described hereinbefore.

Although the DCPD polymers prepared by either one of the polymerization processes as described hereinbefore, were of high mechanical quality, it was discovered, similarly to what is known from other processes for the bulk polymerization of DCPD, that the DCPD polymers were found to contain some residual, i.e. non-converted, DCPD, causing an unattractive odour of the final products.

As it is known that for a number of applications the presence of residual DCPD in the DCPD polymer is considered to be not very desirable or even disadvantageous, there is considerable need to develop a process for the bulk polymerization of DCPD, which would result in DCPD polymers having a lower residual DCPD content. It is therefore the object of the present invention to develop such a process.

As a result of extensive research and experimentation it was surprisingly found when the bulk polymerization of norbornene derivatives, such as DCPD, is carried out in the presence of a catalyst based on a tungsten oxytetra-halide and a phenol having at least one bulky alkyl substituent on the aromatic ringstructure in a position which is ortho with respect to the hydroxyl group, that polymers can be prepared having a considerably lower residual monomer content.

Accordingly the invention provides a process for the bulk polymerization of norbornene derivatives which comprises contacting a norbornene derivative with a catalyst system obtainable by combining the following two components:
a) a tungsten catalyst component obtainable by combining a tungsten oxytetrahalide and a substituted phenol having at least one bulky alkyl substituent, containing at least 3 carbon atoms, on the aromatic ringstructure in a position which is ortho with respect to the hydroxyl group, and
b) at least a tin hydride of general formula (R¹R²R³)SnH, wherein R¹ and R² each may represent hydrogen or may have the meaning of R³, representing an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group.

Suitable norbornene derivatives for use in the process of the present invention include dicyclopentadiene (DCPD), dicyclopentadiene oligomers, 4-alkylidene-norbornenes and 6-alkyl-1,4,5,8-dimethano-1,4,4a,5,8,8a-octahydronaphthalene as exemplified by 6-methyl-1,4,5,8-dimethano-1,4,4a,5,8,8a-octahydronaphthalene. DCPD is a preferred norbornene derivative.

The tungsten oxytetrahalide may for example be tungsten oxytetrabromide but is preferably tungsten oxytetrachloride.

The substituted phenol should have a bulky substituent in at least one of the ortho positions with respect to the hydroxyl group. Examples of suitable bulky substituents include bulky alkyl groups such as iso propyl, 2-n-butyl, tert-butyl, neopentyl and 2-methyl-2-n-butyl, and trialkylsilyl groups such as trimethylsilyl, of which iso propyl and tert-butyl are especially preferred. Preferably both ortho-positions on the phenolic ring are substituted with a bulky alkyl group.

The substituted phenols on which the tungsten catalyst component is based may contain further substituents in addition to the hereinbefore mentioned bulky alkyl groups, such as one or more alkyl and/or halogen groups.

The tungsten catalyst component may be prepared by contacting the tungsten oxytetrahalide with the substituted phenol, for example in the presence of a suitable solvent. Examples of such solvents are cyclopentane, cyclohexane, benzene, toluene, o-, m-and p-xylene, chlorobenzene and 1,2-dichlorobenzene, or mixtures of two or more of such solvents. Suitably the substituted phenol and the tungsten oxytetrahalide are used in a molar ratio of phenol to tungsten in the range of from 1:1 to 10:1 and preferably from 1:1 to 3:1. The tungsten catalyst component may be prepared for example by suspending the tungsten oxytetrahalide in the solvent and adding the appropriate amount of phenol to the suspension formed, stirring the reaction mixture and blowing a stream of dry inert gas, for example nitrogen, through the mixture to remove the hydrogen halide which is formed.

In the tin hydride of general formula (R¹R²R³)SnH, i.e. the activator component, the groups R¹ ,R² and R³ preferably each represent an optionally substituted alkyl group having in the range of from 1 to 10 carbon atoms, and more preferably n-butyl. In addition to the most preferred tributyltinhydride other suitable tin compounds of general formula (R¹R²R³)SnH include tripropyltinhydride, tripentyltinhydride, methyldicyclohexyltinhydride, cyclopentyldimethyltinhydride, trioctyltinhydride, triphenyltinhydride, trisneophyltinhydride and phenyldimethyltinhydride.

Examples of substituents in R¹, R² and R³ are alkoxy groups having in the range of from 1 to 20 carbon atoms, and chlorine and fluorine atoms.

The process according to the present invention may be carried out employing a molar ratio of tungsten to norbornene derivative and a molar ratio of tin compound to tungsten which are not critical and may vary within wide ranges. Preferably, the tungsten to norbornene derivative molar ratio is in the range of from 1:10000 to 1:100 and more preferably from 1:5000 to 1:1000, and the molar range of tin to tungsten is in the range of from 15:1 to 1:1 and more preferably from 12:1 to 1:1.

In a preferred embodiment the catalyst system as described hereinbefore may conveniently be employed for the bulk polymerisation of a technical grade DCPD, i.e. a DCPD grade having a purity e.g. in the range of from 93-97%. However, when employing in said process a DCPD grade of high purity, i.e. a purity ≧99%, it was experienced that gelation, as indicated by a sudden increase in viscosity of the reaction mixture, could occur before the reactants had been properly mixed and/or the mould adequately filled. Hence when employing a high purity grade DCPD in the process according to the present invention, the presence of a so-called reaction rate moderator is required, i.e. a compound which is capable of delaying the onset of polymerization and thus enabling proper mixing at the reactants and adequate filling of the mould.

Suitable moderators include phosphorus compounds such as aryl phosphates, aryl phosphites, alkyl phosphates, alkyl phosphites, alkyl phosphines, alkyl phosphonates, alkyl phosphinates, phosphine oxides, aryl phosphines and in particular trialkyl phosphates, trialkyl phosphites and triaryl phosphites. Tributyl phosphite is a preferred phosphorus based moderator.

The moderator will generally be employed in a molar ratio of phosphorus to tungsten in the range of from 10:1 to 1:1, the actual ratio being determined e.g. by process conditions and formulation used.
A preferred method for conducting the process according to the present invention is to allow a stream containing the tungsten compound catalyst component and a stream containing the activator component to contact with each other, before being injected into a mould whereby at least one of the streams contains the norbornene derivative. Should the polymerization of the norbornene derivative be conducted in the presence of a reaction rate moderator, then said compound may conveniently be mixed with either one of the hereinbefore mentioned reactant streams, provided the components present therein remain stable.

The tungsten catalyst component and the tin hydride of general formula (R¹R²R³)SnH, at least one of these components being combined with a moderator may be stored separately in a norbornene derivative monomer, provided the monomer contains not more than a few parts per million (ppm) by weight of water. These stock solutions are preferably mixed with the desired predetermined amount of the selected monomer. More preferably the tungsten catalyst, the moderator and a predetermined amount of monomer form one of the reagent streams.

It will be appreciated that these intermediate mixtures, comprising at least a norbornene derivative and a tungsten catalyst component or a tin hydride of general formula (R¹R²R³)SnH, at least one of which being combined with a moderator, i.e. thus representing an incomplete catalyst system, and which form part of the ultimate reaction mixture, also form an aspect of the present invention.

A further aspect of the present invention is the catalyst system obtainable by combining
a) tungsten catalyst component obtainable by combining tungsten oxytetrahalide and a substituted phenol having at least one bulky alkyl substituent, containing at least 3 carbon atoms, on the aromatic ringstructure in a position which is ortho with respect to the hydroxyl group, in a molar ratio of phenol to tungsten in the range of from 1:1 to 3:1, and
b) at least a tin hydride of general formula (R¹R²R³)SnH, wherein R¹ and R² each may represent hydrogen or may have the meaning of R³, representing an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group, in a molar ratio of tin to tungsten in the range of from 15:1 to 1:1 and preferably in the range from 12:1 to 1:1.

A preferred embodiment of such catalyst system can be formed by combining
a) tungsten catalyst component obtainable by combining tungsten oxytetrachloride and 2,6-diisopropylphenol in a molar ratio of phenol to tungsten in the range of from 1:1 to 3:1, and
b) tributyltinhydride in a molar ratio of tin to tungsten in the range of from 12:1 to 1:1.

When desirable the polymerization of the norbornene derivative may be conducted in the presence of auxilary compounds such as fillers, antioxidants, stabilizers, pigments and plasticizers as well as in the presence of suitable comonomers. Such compounds may conveniently be introduced into the mould as a component of any one of the reactant streams.

Although the polymerization of the norbornene derivatives is exothermic, it may sometimes be advantageous to employ a heated mould, e.g. having a temperature in the range of from 50 to 100°C. This may for example especially be the case when using a technical grade DCPD, as defined hereinbefore, in order to speed up the polymerization.

The invention is illustrated with the following examples without restricting the scope of the invention, and for which the following information is provided.

### Catalyst preparation

a) 2 Moles of WOCl₄ were suspended in 40 litres of dried cyclohexane contained in a 100 litre reactor, under a dry nitrogen atmosphere. Subsequently 4 moles of dried 2,6-diisopropylphenol were added to said suspension over a period of 0.5h. The tungsten compound and the phenol were allowed to react for 4 hours. The evolved HCl was removed with the aid of a steady stream of dried nitrogen and collected in an excess of aqueous sodium hydroxide solution. The tungsten catalyst component thus prepared, i.e. bis (2,6-diisopropylphenoxy) tungsten oxydichloride was isolated by evaporation of the solvent.
b) The procedure as described under a) was repeated on a much smaller scale but using WCl₆ instead of WOCl₄ and cyclopentane instead of cyclohexane, resulting in the formation of bis (2,6-diisopropylphenoxy) tungsten tetrachloride.

### Determination of unreacted DCPD in DCPD polymer

The DCPD polymers were extracted with toluene and subsequently the toluene was analyzed by means of Gaschromatography.

### Example 1

A 30 ml serum-capped bottle was charged with 10 ml of dried technical DCPD (95% DCPD) and 0.038 mmol (24 mg) of the tungsten catalyst component as prepared under a), under a dry nitrogen blanket.

Subsequently 0.228 mmol of tributyltinhydride (66 mg) was added and the bottle was placed in an oil bath of 90°C. An exothermic reaction was observed which reached a maximum temperature of 182°C after 2 minutes.

The DCPD polymer was found to contain 0.6% m DCPD monomer. The Tg (glass transition temperature) of the DCPD polymer as measured by differential scanning colorimetry (DSC) was 145°C.

### Comparative Experiment A

The procedure of Example I was repeated but replacing the tungsten compound as prepared under a) with an equimolar amount (26 mg) of the tungsten compound as prepared under b).

The DCPD monomer content was found to be 2% and the Tg 130°C.

### Example 2

A 30 ml serum-capped bottle was charged with 23.7 mg of the tungsten compound as prepared under a) and 10 ml of DCPD (99% pure) under a dry nitrogen blanket. The tungsten compound was dissolved at a temperature of 30-38°C. Subsequently 28.5 µl of tributylphosphite and 22,1 mg of tributyltin hydride were added while simultaneously homogenizing the contents of the bottle. The mixture started to gelate after 18 seconds and after 70 seconds a temperature of 200°C was reached.

Toluene extraction revealed the ultimate DCPD polymer to contain 0.6% in DCPD monomer.

### Comparative Experiment B

The procedure of Example II was repeated using an equimolar amount of tungsten compound as prepared under b).

The ultimate DCPD polymer was found to contain 1.7% in DCPD monomer.

When comparing the results obtained in Examples I and II with those of the comparative experiments A and B, it can be concluded that the use of a tungsten catalyst component derived from a tungsten oxytetrahalide and a phenol having at least a bulky alkyl substituent in an ortho position with respect to the hydroxyl group, does indeed result in DCPD polymers having a lower DCPD monomer content, and moreover a higher Tg.

## Claims

1. A process for the bulk polymerization of norbornene derivatives which comprises contacting a norbornene derivative with a catalyst system obtainable by combining
a) a tungsten catalyst component obtainable by combining a tungsten oxytetrahalide and a substituted phenol, having at least one bulky alkyl substituent, containing at least 3 carbon atoms, on the aromatic ringstructure in a position which is ortho with respect to the hydroxyl group, and
b) at least a tin hydride of general formula (R¹R²R³)SnH, wherein R¹ and R² each may represent hydrogen or may have the meaning of R³, representing an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group.

2. A process as claimed in claim 1, wherein the tungsten oxytetrahalide is tungsten oxytetrachloride.

3. A process as claimed in claim 1 or 2, wherein the substituted phenol contains a bulky alkyl group in both ortho positions of the aromatic ringstructure.

4. A process as claimed in any one of claims 1 to 3, wherein the bulky alkyl group is a iso propyl or a tert-butyl group.

5. A process as claimed in any one of claims 1 to 4, wherein the substituted phenol and the tungsten oxytetrahalide are used in a molar ratio of phenol to tungsten in the range of from 1:1 to 10:1 and preferably from 1:1 to 3:1.

6. A process as claimed in any one of claims 1 to 5, wherein R¹, R² and R³ each represent an alkyl group having in the range of from 1 to 10 carbon atoms, and preferably butyl.

7. A process as claimed in any one of claims 1 to 7, wherein the tin hydride of general formula (R¹R²R³)SnH and the tungsten catalyst component are employed in a molar ratio of tin to tungsten in the range of from 15:1 to 1:1 and preferably from 12:1 to 1:1.

8. A process as claimed in any one of claims 1 to 7, wherein the tungsten to norbornene derivative molar ratio is in the range of from 1:10000 to 1:100 and preferably from 1:5000 to 1:1000.

9. A process as claimed in any one of claims 1 to 8, wherein the polymerization of the norbornene derivative is conducted in the presence of tributylphosphite as reaction rate moderator.

10. A process as claimed in claim 9, wherein the moderator is employed in a molar ratio of phosphite to tungsten in the range of from 10:1 to 1:1.

11. A process as claimed in any one of claims 1 to 10, wherein the the norbornene derivative is DCPD.

12. Mixtures comprising at least a norbornene derivative and a tungsten catalyst component or a tin hydride of general formula (R¹R²R³)SnH, and optionally a reaction rate moderator which form part of the reaction mixture for the bulk polymerization of norbornene derivatives.

13. A catalyst system obtainable by combining
a) tungsten catalyst component obtainable by combining tungsten oxytetrahalide and a substituted phenol having at least one bulky alkyl substituent, containing at least 3 carbon atoms, on the aromatic ringstructure in a position which is ortho with respect to the hydroxyl group, in a molar ratio of phenol to tungsten in the range of from 1:1 to 3:1, and
b) at least a tin hydride of general formula (R¹R²R³)SnH, wherein R¹ and R² each may represent hydrogen or may have the meaning of R³, representing an optionally substituted alkyl group having in the range of from 1 to 20 carbon atoms, an optionally substituted cycloalkyl group having in the range of from 3 to 6 carbon atoms in the cycloalkyl ring or an optionally substituted phenyl group, in a molar ratio of tin to tungsten in the range of from 15:1 to 1:1 and preferably in the range from 12:1 to 1:1.

14. A DCPD polymer whenever prepared according to a process as claimed in any one of the preceding claims.
